# EUROPEAN PATENT APPLICATION

(11) **EP 1 813 914 A2**
(43) Date of publication of application: **01.08.2007**
(21) Application number: 06301098.7
(22) Date of filing: 30.10.2006
(51) Int. Cl.: G01C 21/00

(54) **A product, service and activity based interactive trip mapping system, method and computer program product**

(30) Priority: 07.11.2005 US 267196
(71) Applicant: FRANCE TELECOM, 75015 Paris (FR)
(72) Inventor: Eichenbaum, Andrew, South San Francisco, CA 94080 (US); Shishir, Garg, Mountain View, CA 94043 (US); Mullan, Pramila, Los Gatos, CA 95032 (US)

(57) **Abstract**

A system, method, and computer program product for generating a travel itinerary, including specifying a criteria for a query including a start point and an end point of the travel itinerary, and at least one route point, the route point being a service, a product, a place, an activity, or an event. An interactive mapping system is queries with the criteria to obtain information defining the travel itinerary including mapping information and route point descriptive information including consumer information related to the route point. The travel itinerary is displayed as a map, driving instructions, or the consumer information.

## Description

The present invention is directed to systems, methods, and computer program products for products, services, events, and activity-based interactive trip mapping; more particularly interactive mapping of a multi-point trip.

Recently, online web services have seen the growth of available online mapping services, such as Google Maps, Yahoo! Maps, and MapQuest, and at the same time an increasing number of product and service listing websites and databases have become available for consumers, such as Froogle, Shopping.com, Shopzilla, and yellowpages.com. Current online mapping services allow a user to create directions to specific locations; for example: directions from a starting point to an end point, or from starting point to an end point by passing by one or more intermediate points. Further, mapping service sites usually are configured to show a certain number of sponsored locations or links to shops or services for consumers that are in the wider geographic area of the calculated directions.

Current product listing websites only list products based upon product details, specification, price, and store information, etc. A store, retailer, or other business offering products or services today usually provides a reference by a link on their webpage to a mapping service by using the address or other geographical data of the corresponding store.

The inventors of the present invention have recognized that presently there is no integration of the above-noted two web-based services available, and no software or service is available to provide a combination of these services. The present invention bridges the gap between the online mapping services and online product listing sites or databases, so as to provide a combined service for interactive mapping. Accordingly, one object of the present invention is to provide a solution to the above described deficiency of online mapping systems and online product listing services. A process for interactive mapping, such as an interactive mapping system of a multi-point itinerary or trip is provided, where the route mapping is based upon information about each point and preferences of the user. The mapping process generates an access route map including individual intermediary or route points such as: service points, shopping locations, geographical locations, and other service or activity locations. The route is based upon overall itinerary or trip constraints and preferences, individual stop point constraints and preferences, and the current availability of products and services at the route points. The interactive mapping system calculates an optimized trip by optimizing global constraints of the itinerary including, but not limited to, time, cost, and distance. The mapping system also takes into account limitations or parameters set for the individual route points. The service then allows the user to reserve or purchase available items from the set route points.

To address the above described and other objects, the present inventors have invented a novel computer-based system, method, and computer program product by which an interactive mapping system is provided, where the trip as a whole and the individual intermediary or route points and destinations are fully configurable. Based on a query entered by a user, such as a potential customer, to the interactive mapping system via a web interface or another type of user interface or access terminal, the interactive mapping system creates a shopping, service, activity, or event trip or itinerary, with a starting point and/or an end point, where the route is made up of route points or intermediary geographical points that are generated from a list of products, services, activities, and/or events that the user would like to purchase, use, rent, or perform during the trip. As one of ordinary skill in the art would recognize, the invention is not limited to the above examples of possible activities. The user can thereby create a query for the interactive mapping system including data related to a start point or end point, and can also create a list of possible products, services, activities, and events the user wants purchase, use, or rent during the trip. Any activity, service, event, or product that has to be purchased, rented, used, or performed during the trip, and that is related to a geographical location, can be used to generate the route points or intermediary geographical points. The user can further specify the individual product, service, activity, or event, before or after the querying of the interactive mapping system. In certain embodiments of the invention, it is also possible to enter overall trip or itinerary constraints and thereby set global itinerary criteria to be applied to any of the products, services, activities, or events that were not individually specified. The itinerary can be optimized based specified criteria (minimize distance, maximize fuel efficiency, etc.).

Based on the query and other information entered by the user, the interactive mapping system creates a map or accesses a service that routes a map based upon the specification data. Once the interactive mapping system has proposed a route, the user can then interactively change constraints to the individual intermediary points (route points) or to the overall trip, and such modification is possible until the user is satisfied with the route. Further, driving directions may be generated, and the route created by the interactive mapping system may be exported to a printer to print a convenient mapping document for the user, to a personal digital assistant (PDA), to a mobile phone, to a car navigation system, to another mobile device, or to a navigation system.

Example constraints to the route points can be any parameter describing the products, services, activities, locations, or events. Constraints or criteria to the overall trip can be, for example, the time, distance, or any other user-related or consumer-related constraints. A non-limiting example of parameters that may be used as global itinerary parameters of the overall trip include: total cost of the trip (including costs associated with a product, service, activity, or event, gas costs, car maintenance costs per mile), total costs of the trip excluding the transportation costs, total distance of the trip, maximum number of locations the user wants to travel to, total duration of the trip, departure time at the starting point, latest possible end time of the trip, minimal stops at traffic lights, avoiding dangerous areas (heavy traffic or crime), avoiding highways, preferring highways, maximum distance between two route points, and so on. A non-limiting example of parameters specifying the products, services, activities, and events include: the price of a product, service, activity, or event, location of an establishment, hours of operation, item availability (store stock, status of your dry cleaning, etc.), user ratings of the place offering the requested product, service, activity, or event, desired or required duration of different types of activities on the trip, such as the duration of meetings, movies, show at a theater, amusement parks or sports activities, etc.

Other characteristics and advantages of the invention will become apparent from the following detailed description, particularly when considered in conjunction with the drawings in which:
FIG. 1 is a block diagram showing an overall system overview for one embodiment of the present invention;
FIG. 2 is a schematic view of a possible layout of a web page or graphical user interface to enter a query to the interactive mapping system;
FIG. 3 is a schematic view of a possible layout of a modification or selection web page or graphical user interface to enter further options to the interactive mapping system;
FIG. 4 is a schematic view showing first results of the query, showing different route points of the trip;
FIG. 5 is a schematic view of a web page or graphical user interface for selective modification and input of additional data, after the first results were displayed;
FIG. 6 is a schematic view of a web page or graphical user interface showing the results after modifying or further specifying the itinerary by the user;
FIG. 7 is a block diagram of typical computer system that can be used to implement the invention or parts of the invention;
FIG. 8 is a block diagram of the high-level architecture of the interactive mapping system;
FIG. 9 is an exemplary flow chart of the steps performed by the user to generate a trip with the interactive mapping system;
FIG. 10 is a flow chart of the mapping system when performing the routing of the itinerary or trip;
FIG. 11 is an exemplary data field structure that can be used to query the interactive mapping system;
FIG. 12 is a screen shot of an exemplary implementation of a graphical user interface of the start page;
FIG. 13 is a screen shot of an exemplary implementation of a graphical user interface showing a first trip after querying the interactive mapping system; and
FIG. 14 is a screen shot of an exemplary implementation of a graphical user interface of a page proposing different stores for a product that was chosen in the initial query.

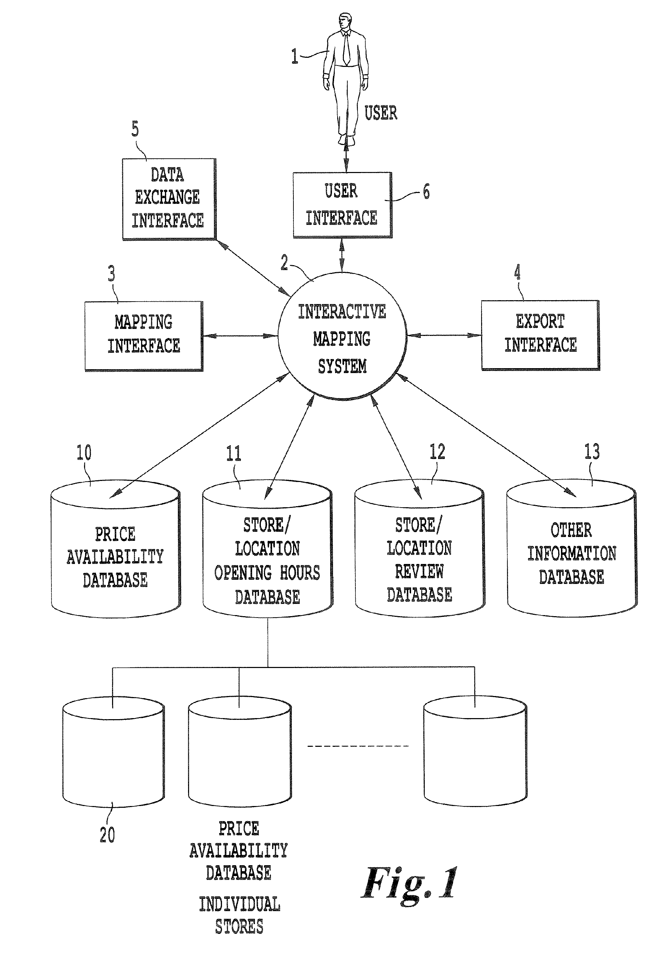

Referring now to the drawings, wherein like reference numerals designate identical or corresponding parts throughout the several views. FIG. 1 shows a system overview illustrating different resources that the interactive mapping system 2 may access. A user 1 can access the interactive mapping system 2 by means of a user interface 6. The system includes databases 10, 11, 12, 13, and 20, mapping interface 3, export interface 4, and a general data exchange interface 5, that can be directly or indirectly accessed or used by the user 1. A trip or itinerary passing through or close to different intermediary points is created by the interactive mapping system 2 based upon products, services, activities, and events specified to the interactive mapping system 2 by the user 1. In one embodiment of the present invention, the process is interactive and self-updating, providing the user 1 with access to various databases, servers, or other resources, which are regularly updated themselves, such that consumers using this service may map out routes or itineraries for shopping, service, activity, and event procurement. It should be understood that the services and interfaces illustrated in FIG. 1 are for an exemplary embodiment of the present invention only, and that other services, data, and interfaces are possible while staying within the scope of the present invention.

The interactive mapping system 2 provides access to different types of databases and can also maintain its own databases to create a route. The database of interactive mapping system 2 can be stored or created locally at the user's PC or other terminal device, or can be stored at a server that is accessed by the interactive data system. Information databases such as databases on price and availability 10, may include information related to store or service location, activity availability, and current price. Examples include the availability of a particular product a user wants to purchase, status information such as whether the dry cleaning is ready, availability of seats for a movie, opera, theater, musical, available space in the fitness center, driving range, tennis courts, and so on. Other possible databases include those having information on store or activity location and hours of operation 11 (geographical location of the shop, service, activity, or event location), and databases including user reviews 12. It is also within the scope of the invention to access databases 13 having other types of available information, such as databases with information on road construction, traffic information, local access direction for individual shops, etc.

Different scenarios are within the scope of invention how to use the interactive mapping system 2. For example, the interactive mapping service 2 can be accessed by a user interface 6. The interactive mapping system 2 itself can access a mapping system through any kind of Internet browser or locally installed mapping system via a mapping interface 3, and the mapping results can be shown on the Internet browser, and the result can be exported by a export interface 4 to a printer, a personal digital assistant (PDA), a cell phone, or a car navigation system, or any other system or mobile electronic device. The results of the interactive mapping system 2 shown on an Internet browser can be exported to any type of device that can display or instruct the user how to use the generated interactive map. In one embodiment, the interactive mapping system is accessed via a mobile phone, cellular phone, or PDA, and the results are subsequently shown on the device, without further exporting the results to a second device. By means of the data exchange interface 5, other information can be accessed by the interactive mapping system, for example, the file system of the local PC or an e-mail system can be accessed and used by the interactive mapping system 2.

Next, the use of the interactive mapping system from a user's view is explained. In this illustrative example, a user uses the interactive mapping system 2 to plan his trip or itinerary. During his trip, he wants to do three activities: pizza for lunch, drop off the laundry at the dry cleaning, and gas up the car. These three activities are the intermediary points (route points) of the trip. His start location is 801 Gateway Boulevard, South San Francisco, California, and the end location, which signifies the location where he ends his trip, is the same address as the start location. The trip or itinerary can also be given a name or a label, for example "afternoon shopping trip," such name or label can be used to identify the trip when it is saved by the user. In another embodiment, rather than indicating different activities the user wants to do, a shopping list or service list is set up. The interactive mapping system 2 therefore can also include the functionality of a "shopping cart" service. Such list can include a variety of items that the user would like to purchase or rent, or services or activities that the user would like to use or accomplish. The shopping cart list can be associated with a particular shop, a shopping mall, a sports center, etc. and thereby it is possible to add additional information to an intermediary point search request. The user may also enter a certain number of products or services to the interactive mapping system, and the interactive mapping system will combine as many products or services together to reduce the number of intermediary or route points. For example, the pizza and the dry cleaners may be located in the same shopping mall, thereby consisting of only one route point.

The interactive mapping system permits data and status exchange between the shop, service, activity, or event locations and their respective databases or websites (such as e-commerce systems), and the interactive mapping system 2 itself. The local database of the interactive mapping system can thereby be updated with data that are time-variable. For example, stock and availability information of products, services, and activities, as well as status of tasks that are processed and can be updated. In the example of the dry cleaning mentioned above, the shopping cart of the dry cleaners could have two or more entries. The first entry is the dropping off of the dry cleaning, while the second would be a reminder that the dry cleaning is ready to be picked up. The pick-up date and time could be set by the user when querying the dry cleaners when planning the trip, or integrated into the system such that the dry cleaner sends notice, when the dry cleaning is ready, thus updating the system and notifying the user. The interactive mapping system can be updated by a database update system or a logistics or stock management software of the dry cleaners. Such information on the status of the dry cleaners or any over service can also automatically update the shopping cart of the user, as soon as the service is performed. The notification can be in the form of an alarm or reminder data transmission, for example in form of an e-mail, Internet data packet, text message, or an Internet control message protocol packet (ICMP-packet), so that an itinerary can be generated to accomplish all the ready tasks. It should be noted that products could also be purchased at a location being primarily service providers. In the above case of a dry cleaner, a consumer may want to purchase cleaning related products that they have for sale at the dry cleaner.

If a conventional mapping system would be used together with conventional "yellow pages" website, it would take a substantial amount of time and effort to map the trip. First, most of the current mapping systems only allow searching and mapping of two-point trips, where one known point forms the start point. Some systems allow an additional intermediary stop point. Second, by using the current mapping systems and the businesses or activities yellow pages, the user would have to look for a pizza place close to the address of the start point of a particular trip. Therefore, two or more separate searches for suitable dry cleaner companies and gas stations, if possible, those closest to the pizza place, would have to be performed and all the information would have to be assembled manually so as to create a desired trip. The present invention allows the user to merely perform one search to create the activity trip. Further searches are optional to further specify or modify the trip.

The above example using three intermediary or route points as intermediary destinations (pizza, dry cleaning, gas station) during the trip provides a basic query for the initial mapping or activity trip based on the interactive mapping service 2. The minimal requirement to create an activity trip includes a starting point and at least one desired intermediary point (route point). However, the invention is not limited as to the number or variety of intermediary destinations (route points) or as to the start and end points for the trip. The intermediary point or route point can be a geographic location or address (such as the name or address of a shopping mall), but can also be a product, service, activity, or event name, a shop or restaurant name (Joe's Pizza) or just the name of a product itself (IPOD), which is not related to a geographic position or address. The interactive mapping system 2 is configured to find the ideal geographic position or address for the route point.

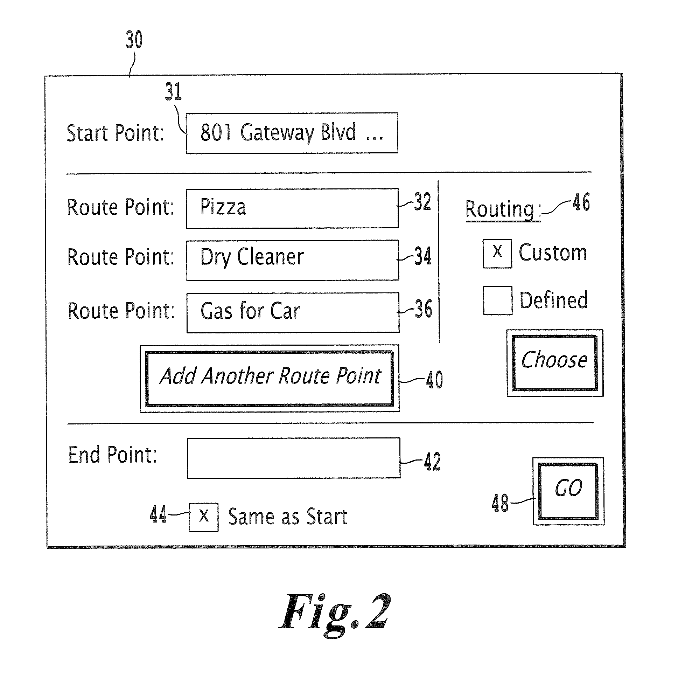

FIG. 2 shows a schematic view of a first embodiment of a basic layout of a user interface 6 to query the interactive mapping system 2, provided for example via a web interface or other graphical user interface running on a computer platform such as a personal computer (PC) including browser software such as MICROSOFT EXPLORER, MODZILLA FIREFOX, or NETSCAPE NAVIGATOR, or on a personal digital assistant (PDA) or mobile phone, such as PALM, BLACKBERRY, HANDSPRING TREO with browser software such as OPERA, POCKET EXLORER, PALM OS, etc., to query the interactive mapping system through the Internet, local area or wide area network (LAN/WAN). The connection between the user's device and the Internet could be either wired or wireless over a wireless connection. While the example in this specification refers to the Internet, it is also within the scope of the invention that the interactive mapping service is accessed and/or provided within any type of network. The start point can be entered into field 31 on the top of the web page or other graphical user interface 30, and the three intermediary or route points 32, 34, and 36 can be specified by the user. Shown here on the right hand side of the interface 30, a routing selection criterion 46 can be specified by the user. This option allows global route mapping by choosing the "defined" option, with possible configurable global routing options or limitations such as: shortest route, smallest number of stops (for example by entering a shopping list, where multiple items will be located at one place such as a shopping mall or a department store), lowest overall price, highest rated stores, store hours of operation, least number of traffic lights, lowest gas consumption, low traffic density on chosen roads. Any feature can be included into the routing options, that could be applied to the itinerary globally and that can impact the routing of the itinerary etc. By choosing the "custom" option, we are able to further enter parameters into the query to specify the individual route points. The "custom" option allows the user to a specific limitation or parameter for one or more products, services, activities or events, for example a specific gas station company can be chosen for the gas purchase, or an acceptable price range for a product that the user want to purchase can be entered. The user or customer can thereby perform a more refined and detailed search and routing bases on such additional data.

Also shown on this exemplary interface 30 is a field in which a user can enter an end point 42. The route can be a one-way route, for example from work to home, but can also start and end at the same point. If the end point is the same as the start point, option box 44 can be checked, or if the box 42 for the end point is not filled out, the interactive mapping system can automatically assume that the start point is also the end point. Another example of a one-way route would be a trip from the user's home to a friend's house, where the user wants to buy a gift or some food for his friend along the way. By adding additional parameters to the intermediary or route points, a highly customer-rated liquor, flower, or chocolate shop could be chosen along the way. After the first parameters are provided to the graphical user interface 30, the user can click or activate the go button 48, to proceed to the next step in the interactive mapping system. As would be recognized by one of ordinary skill, the examples just described are not limiting and many other variants could be devised while staying within the scope of the invention.

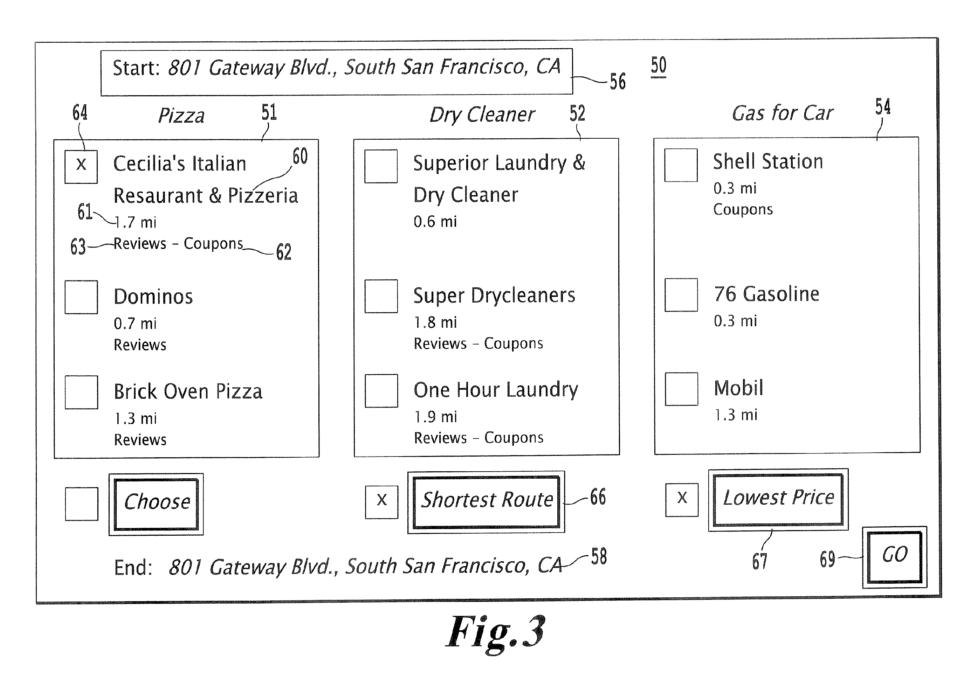

FIG. 3 shows a schematic view of a possible layout of a graphical user interface 50, after the interactive mapping system has been queried for the first time with a first set of information. This interface provides a mechanism through which the user may specify further options or criteria for one or more intermediary or route points. As an example, the graphical user interface 50 shows three lists 51, 52, and 54, corresponding to each of the route points specified by the user: pizza, dry cleaner, and gas for the car. The lists 51, 52, and 54 include a number of possible choices. In the case of pizza, the list of route points 51 include the places were pizzas can be bought. Each route point can be shown with additional information, such as name of the place 60, distance 61 from the start point, a link or information on reviews 63 by other customers or consumer reports, and available coupons or links thereto 62. Other information related to the individual route points, such as hours of operation, availability of the desired product, service, activity, events, or availability of parking spaces, could also be shown. It is within the scope of the invention that the interactive mapping system automatically omits possible route points (route points that are located close to a possible itinerary), where the desired product, service, activity, or event is not available or not ready. After providing a start and/or end point to the interactive mapping system 2 in the fields 31 and 42, the interactive mapping system 2 can display the start point 56 and the end point 58, so as to confirm to the user that these locations exist or were found and can be used to create the itinerary. If the addresses for the start point 56 and end point 58 were not found, the interactive mapping system could inform the user that these locations were not found, and propose similar addresses or location names so as to propose a choice of possible locations to the user, that fit closest to the previously entered address or location. When the addresses or locations of the start and end points 56, 58 are found, the user can select one of the proposed route points by checking a box 64, thereby customizing the entire route map that will be created by the interactive mapping system 2. For each of the three route points the user can choose a desired location. After having made a selection of a route point from each list 51, 52, and 54, the user can now query the interactive mapping system 2 again, by re-generating the itinerary or trip, to take global itinerary criteria into account. In the example given in FIG. 3, additional global criteria can be selected, such as shortest possible route 66, or lowest possible overall price 67. Many other global itinerary criteria are possible, including shortest route, least number of stops (thereby getting multiple items at one place), lowest overall price, highest rated store, store hours, overall trip gas consumption, or low traffic roads.

Each possible route point shown in the lists 51, 52, and 54 can be accompanied with a hyperlink or a link to a database providing further information about the route point, such as for example hours of operation or customer reviews. In the examples given in FIG. 3, each of the store lists shows the top three listings based on the specific criteria, for example the distance from the start point. These listings can now be customized or selected by the user based upon additional criteria. In an interactive setting, by updating one list, the other lists might be updated due to distance or other constraints. In another embodiment, instead of directly selecting the route point by the user, it is possible for the user to set a global routing criteria, such as shortest possible route 66, cheapest price 67, or highest customer rating, and then let the interactive mapping system 2 choose at least one route point based on the selected global criteria. After the more detailed settings and information have been selected, the interactive mapping system is queried again, to have a new trip or itinerary calculated.

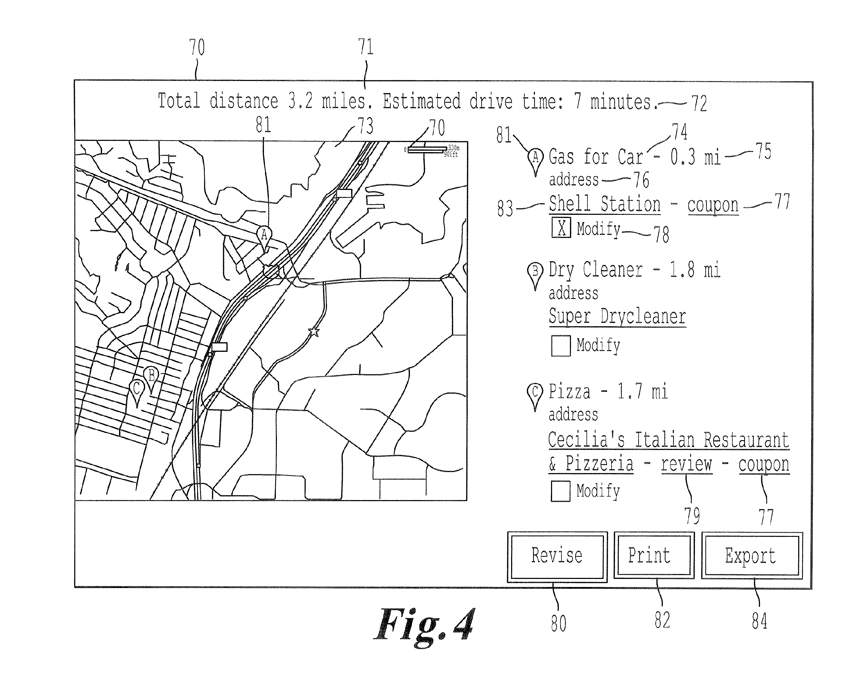

In FIG. 4, an example of the results of the route mapping after querying are shown as a graphical user interface 70 on a display. Shown on the left side of the interface 70, the map 73 of the trip is shown, on the right side of the interface 70, the route points 74 are shown in a text format. In the example shown in FIG. 4 the user is given the option to further modify the proposed trip. The original constraints might have been erroneously set, were too narrow, or perhaps the user simply does not like the route shown on the geographic map calculated by the interactive mapping system 2. Therefore, the user might want to change the route to a shorter, cheaper, or otherwise modified route. In this exemplary embodiment, the interface 70 includes global information on the trip or itinerary. Such information can be total distance 71 or estimated drive time 72. Other information such as number of stops, number of traffic lights, estimated gas consumption, total toll road or toll bridge fees, indicators estimating the danger level of the roads, etc. can also be shown on the interface 70. The route points can also be shown on the interface 70, and every route point can be modified individually. In the example shown in FIG. 4, each text block associated with a route point has a check box 78 that can be selected, and after the user has selected which route points to modify, the user can click on the "revise" button 80 so as to enter new information or choose another route point. The text block or text information associated to each possible intermediary destination can include the initial name or denominator 74 of the route point used by the user, distance 75 from the starting point, the address or location 76 of the route point, real name 83 of the route point, links to coupons 77 or to customer reviews 79. Any information related to the route point could be shown here or could be accessed by pop-up screens through activation of hyperlinks or in additional graphical user interfaces. For example, the status or availability of products, services, or activities could be shown to the user at this time. These text or graphical elements describing each route point can also be hyperlinks directing the user to other useful information. A graphical symbol 81 or a number or letter can show the individual route point on the map 73, and can also be shown next to the text block describing the route point 74.

It is also within the scope of the invention that the user can select the individual route point destinations such as the symbols 81 shown on the map, so as to reconfigure the parameters or constraints associated with the route point. For example, the symbol 81 could be clicked on or by clicking on the right mouse button, a new window or context window would be shown, where this particular route point could be modified, deleted, or further specified. If the user is pleased with the trip or itinerary that the interactive system has provided, the user can print the itinerary by selecting the print button 82 or can export the itinerary to another electronic device by selecting the export button 84.

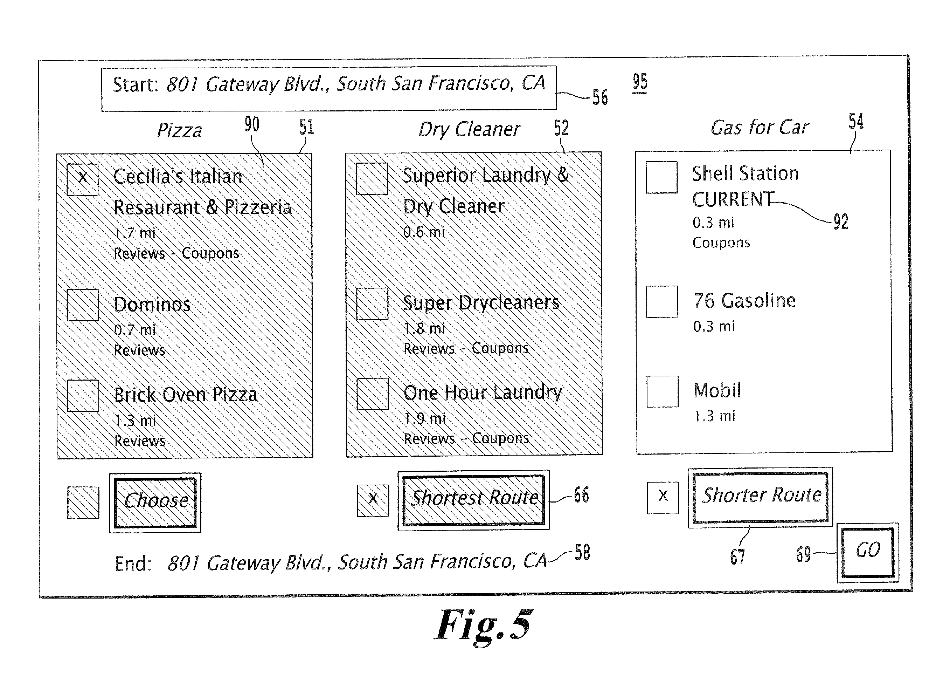

FIG. 5 is an example interface for modifying the route point 54 for "gas for car" that was presented to the user on the interface shown in FIG. 4. In the user interface 95 of FIG. 5, the choices "Pizza" and "Dry Cleaner" are disabled because they were not selected by the user to be modified. The route point 54 "gas for car" is enabled for modifications and includes a list of different gas stations that the user can choose again. The current choice 92 of gas station is highlighted on the interface by special text or a special icon. The user can subsequently modify the route criteria for the gas station to "shorter," by selecting the corresponding button 67, or can directly choose another gas station as his "gas for car" route point. By making a new selection, results of the selection are displayed together with the items of the list, showing the gains and losses for each possible change in route such as increased gas cost, decrease in trip distance, increase in number of traffic lights, change in traffic density, or trip length. Once the user has reconfigured the list so as to satisfy his requirements, the user can send the new query to the interactive mapping system by selecting the "go" button 69, and the new trip will be calculated by the interactive mapping system.

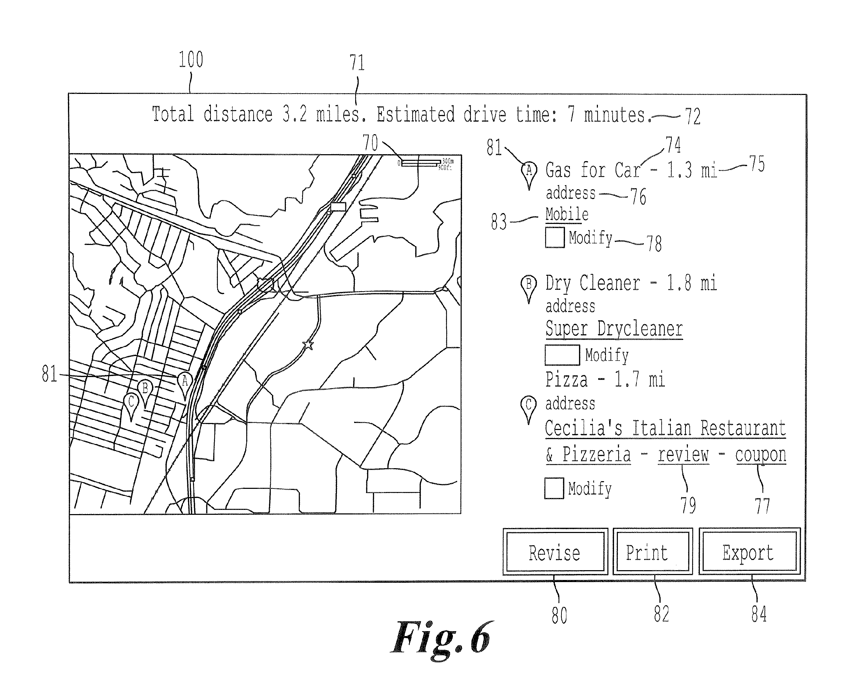

FIG. 6 shows a possible layout of a graphical user interface 100 showing the new itinerary or trip reflecting the user's revised itinerary. The new itinerary can be repeatedly modified by the user, until he has a satisfactory trip for his shopping, services, activities, or events. The user has the ability to check the route displayed on the map 70 and can then choose to print or export the generated itinerary to another device, by use of the respective buttons or links 82, 84. For example, if the user is pleased with the trip, he can print the map and directions associated with the map, or can export the map to a device such as a PDA, Global Positioning System (GPS) unit, cellular phone, or to a car navigation system. Exportation of the itinerary data can be through a local port of the device through which the user is accessing the interactive mapping system, such as a serial port, universal serial bus ports (USB), fire-wire, network interface, or can be done by wireless access such as Bluetooth or Wifi. More details on wireless linking electronic components or devices can be found in U.S. Patent No. 6,909,946, the entire contents of which are hereby incorporated by reference.

It is also within the scope of the invention that the itinerary can be saved as a file to a disk, memory card, or optical data carrier such as a CD, DVD, etc., and that an electronic device subsequently reading the saved itinerary can display the map and/or the driving directions. The itinerary can also include, in addition to the driving directions, different key information such as estimated time for the trip, overall distance, estimated gas consumption, and this information can be also dependent on the time when the trip will be done. Other business-related aspects can also be included in the listings of different shops, service locations, activities, or event centers, including, but not limited to customer satisfaction rankings or payment possibilities.

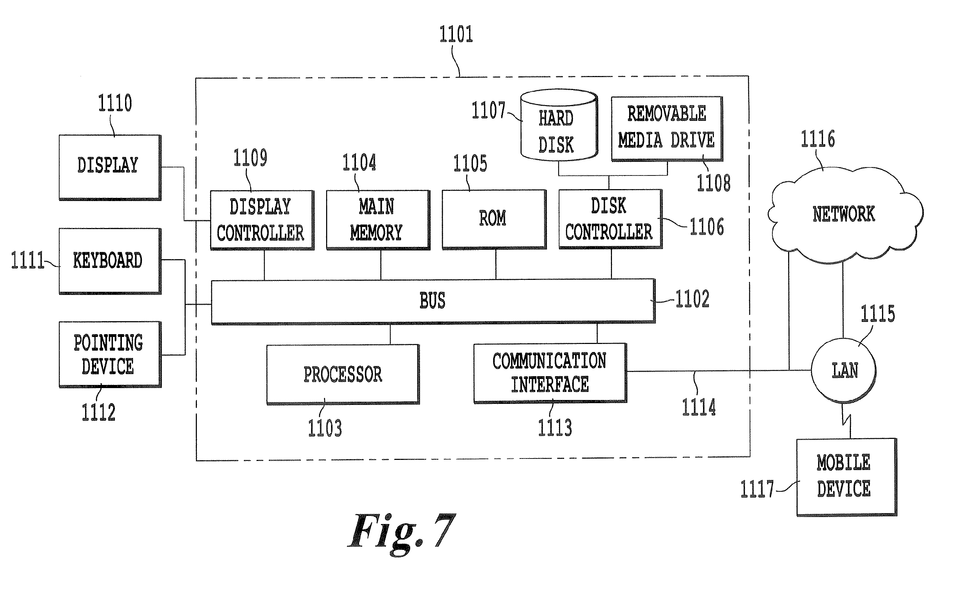

FIG. 7 is a schematic diagram of a possible computer system 701 that can be used to implement the different types of servers, databases and also on which the application software, browsers and software interfaces can be implemented. More details on a possible computer system can be found in White, Ron, "How Computers Work," Que Corporation, September 1999, Millenium Edition, the entire contents of which are incorporated by reference. For example, the graphical user interface for accessing the interactive mapping system 2 could be shown on a display 1110 of a computer system 701 and the interactive mapping system is accessed through the local area network (LAN) interface 1115 over the internet or another type of network. More details the internet an other networks, useable for the interactive mapping system to access different data, resources, interfaces, etc. can be found in Gralla, Preston, "How The Internet Works," Que Corporation, August 1999, Millenium Edition, the entire contents of which are incorporated by reference. The software or a part of the software of the interactive mapping system itself could be executed on a server at a different location, the server having an architecture like the schematic diagram of the computer system 701. It is also within the scope of the invention that the software or a part of the software of the interactive mapping system is installed on a computer system 701, such as a PC at the user's premises, and the interactive mapping system accesses different databases and other resources a such as mapping interfaces through the LAN interface 1115 over a network such as the internet.

The computer system 701 includes a bus 1102 or other communication mechanism for communicating information, and a processor 1103 coupled with the bus 1102 for processing the information. The computer system 701 also includes a main memory 1104, such as a random access memory (RAM) or other dynamic storage device (e.g., dynamic RAM (DRAM), static RAM (SRAM), and synchronous DRAM (SDRAM)), coupled to the bus 1102 for storing information and instructions to be executed by processor 1103. In addition, the main memory 1104 may be used for storing temporary variables or other intermediate information during the execution of instructions by the processor 1103. The computer system 701 further includes a read only memory (ROM) 1105 or other static storage device (e.g., programmable ROM (PROM), erasable PROM (EPROM), and electrically erasable PROM (EEPROM)) coupled to the bus 1102 for storing static information and instructions for the processor 1103.

The computer system 701 also includes a disk controller 1106 coupled to the bus 1102 to control one or more storage devices for storing information and instructions, such as a magnetic hard disk 1107, and a removable media drive 1108 (e.g., floppy disk drive, read-only compact disc drive, read/write compact disc drive, compact disc jukebox, tape drive, and removable magneto-optical drive). The storage devices may be added to the computer system 701 using an appropriate device interface (e.g., small computer system interface (SCSI), integrated device electronics (IDE), enhanced-IDE (E-IDE), direct memory access (DMA), or ultra-DMA).

The computer system 701 may also include special purpose logic devices (e.g., application specific integrated circuits (ASICs)) or configurable logic devices (e.g., simple programmable logic devices (SPLDs), complex programmable logic devices (CPLDs), and field programmable gate arrays (FPGAs)).

The computer system 701 may also include a display controller 1109 coupled to the bus 1102 to control a display 1110, such as a cathode ray tube (CRT), for displaying information to a computer user. The computer system includes input devices, such as a keyboard 1111 and a pointing device 1112, for interacting with a computer user and providing information to the processor 1103. The pointing device 1112, for example, may be a mouse, a trackball, or a pointing stick for communicating direction information and command selections to the processor 1103 and for controlling cursor movement on the display 1110. In addition, a printer may provide printed listings of data stored and/or generated by the computer system 701.

The computer system 701 performs a portion or all of the processing steps of the invention in response to the processor 1103 executing one or more sequences of one or more instructions contained in a memory, such as the main memory 1104. Such instructions may be read into the main memory 1104 from another computer readable medium, such as a hard disk 1107 or a removable media drive 1108. One or more processors in a multi-processing arrangement may also be employed to execute the sequences of instructions contained in main memory 1104. In alternative embodiments, hard-wired circuitry may be used in place of or in combination with software instructions. Thus, embodiments are not limited to any specific combination of hardware circuitry and software.

As stated above, the computer system 701 includes at least one computer readable medium or memory for holding instructions programmed according to the teachings of the invention and for containing data structures, tables, records, or other data described herein. Examples of computer readable media are compact discs, hard disks, floppy disks, tape, magneto-optical disks, PROMs (EPROM, EEPROM, flash EPROM), DRAM, SRAM, SDRAM, or any other magnetic medium, compact discs (e.g., CD-ROM), or any other optical medium, punch cards, paper tape, or other physical medium with patterns of holes, a carrier wave (described below), or any other medium from which a computer can read.

Stored on any one or on a combination of computer readable media, the present invention includes software for controlling the computer system 701, for driving a device or devices for implementing the invention, and for enabling the computer system 701 to interact with a human user. Such software may include, but is not limited to, device drivers, operating systems, development tools, and applications software. Such computer readable media further includes the computer program product of the present invention for performing all or a portion (if processing is distributed) of the processing performed in implementing the invention.

The computer code devices of the present invention may be any interpretable or executable code mechanism, including but not limited to scripts, interpretable programs, dynamic link libraries (DLLs), Java classes, and complete executable programs. Moreover, parts of the processing of the present invention may be distributed for better performance, reliability, and/or cost.

The term "computer readable medium" as used herein refers to any medium that participates in providing instructions to the processor 1103 for execution. A computer readable medium may take many forms, including but not limited to, non-volatile media, volatile media, and transmission media. Non-volatile media includes, for example, optical, magnetic disks, and magneto-optical disks, such as the hard disk 1107 or the removable media drive 1108. Volatile media includes dynamic memory, such as the main memory 1104. Transmission media includes coaxial cables, copper wire and fiber optics, including the wires that make up the bus 1102. Transmission media also may also take the form of acoustic or light waves, such as those generated during radio wave and infrared data communications.

Various forms of computer readable media may be involved in carrying out one or more sequences of one or more instructions to processor 1103 for execution. For example, the instructions may initially be carried on a magnetic disk of a remote computer. The remote computer can load the instructions for implementing all or a portion of the present invention remotely into a dynamic memory and send the instructions over a telephone line using a modem. A modem local to the computer system 701 may receive the data on the telephone line and use an infrared transmitter to convert the data to an infrared signal. An infrared detector coupled to the bus 1102 can receive the data carried in the infrared signal and place the data on the bus 1102. The bus 1102 carries the data to the main memory 1104, from which the processor 1103 retrieves and executes the instructions. The instructions received by the main memory 1104 may optionally be stored on storage device 1107 or 1108 either before or after execution by processor 1103.

The computer system 701 also includes a communication interface 1113 coupled to the bus 1102. The communication interface 1113 provides a two-way data communication coupling to a network link 1114 that is connected to, for example, a local area network (LAN) 1115, or to another communications network 1116 such as the Internet. For example, the communication interface 1113 may be a network interface card to attach to any packet switched LAN. As another example, the communication interface 1113 may be an asymmetrical digital subscriber line (ADSL) card, an integrated services digital network (ISDN) card or a modem to provide a data communication connection to a corresponding type of communications line. Wireless links may also be implemented. In any such implementation, the communication interface 1113 sends and receives electrical, electromagnetic or optical signals that carry digital data streams representing various types of information.

The network link 1114 typically provides data communication through one or more networks to other data devices. For example, the network link 1114 may provide a connection to another computer through a local network 1115 (e.g., a LAN) or through equipment operated by a service provider, which provides communication services through a communications network 1116. In preferred embodiments, the local network 1114 and the communications network 1116 preferably use electrical, electromagnetic, or optical signals that carry digital data streams. The signals through the various networks and the signals on the network link 1114 and through the communication interface 1113, which carry the digital data to and from the computer system 701, are exemplary forms of carrier waves transporting the information. The computer system 701 can transmit and receive data, including program code, through the network(s) 1115 and 1116, the network link 1114 and the communication interface 1113. Moreover, the network link 1114 may provide a connection through a LAN 1115 to a mobile device 1117 such as a personal digital assistant (PDA) laptop computer, or cellular telephone. The LAN communications network 1115 and the communications network 1116 both use electrical, electromagnetic or optical signals that carry digital data streams. The signals through the various networks and the signals on the network link 1114 and through the communication interface 1113, which carry the digital data to and from the system 701, are exemplary forms of carrier waves transporting the information. The processor system 701 can transmit notifications and receive data, including program code, through the network(s), the network link 1114 and the communication interface 1113.

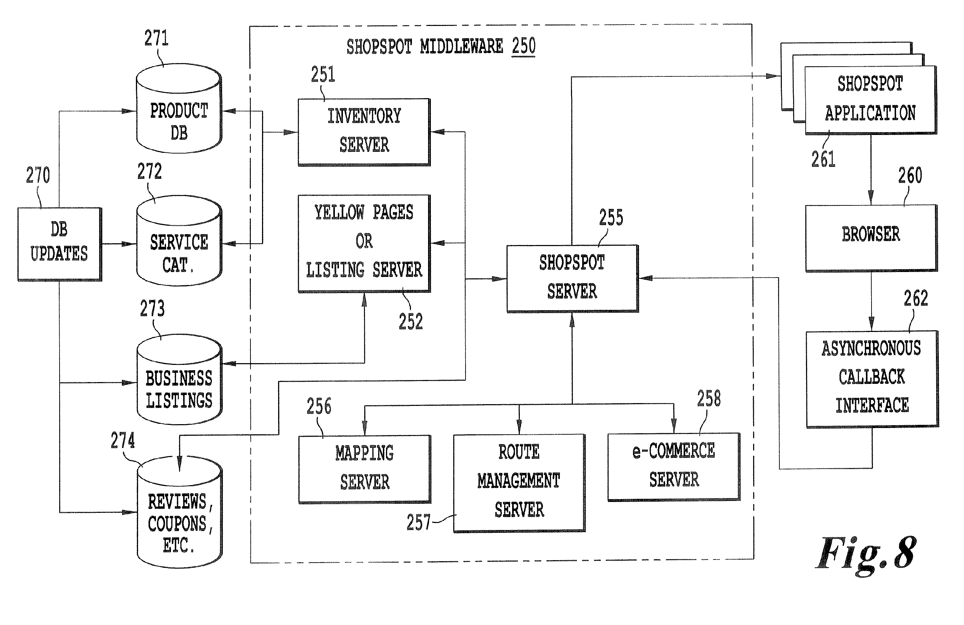

FIG. 8 illustrates a possible embodiment of the interactive mapping system high-level architecture. The interactive mapping system includes ShopSpot middleware 250 that controls the overall data flow. On the front-end side or user side, a web interface or any other graphical user interface is controlled by the ShopSpot application 261 and an asynchronous call-back interface 262. The ShopSpot application 261 can control a browser 260 such as a web browser to display the user-relevant data and the graphical interfaces to interact with the user. The asynchronous call-back interface 262 delivers information entered by the user back to the ShopSpot middleware 250. In an exemplary embodiment, the ShopSpot Application 261 is implemented as an Internet application. In such an implementation, the ShopSpot application 261 is browser resident and does not require any additional capabilities on the client side. The Shop Spot middleware 250 is a web native layer that interacts with partner databases 271, 272, 273, and 274 using XML-HTTP or Web services based calls. The ShopSpot servers, including the inventory and listing servers 251, 252, store data that is collected via such XML based calls to partners. The popular XML-HTTP library can be used for this. The ShopSpot application 261, that can be based on a Rich Internet Application (RIA) based framework such as AJAX or AFLAX, interacts with the various ShopSpot middleware 250 to modify and update the ShopSpot interface without constant refreshing of the application with additions to the database. The RIA application framework should be a browser resident component that employs a callback mechanism to interact with various components in the network without any changes or updates to the overall user interface. More details for the use of the AJAX framework for implementation of a browser resident application can be found in the article "Ajax: A New Approach to Web Applications," Jesse James Garrett, February 18, 2005, Adaptive Path newsletter, San Francisco, California 94107, U.S.A. the entire contents of which are incorporated herein by reference. The article can be seen at the web page: http://www.adaptivepath.com/publications/essays/archives/000385.php

The ShopSpot middleware 250 includes a ShopSpot server 255. The ShopSpot server can access five separate services, an inventory server 251, a yellow pages or listing server 252, a mapping server 256, a route management server 257, and an e-commerce server 258. Each of these servers can be part of the interactive mapping system. These servers can be installed on a single computer system or on a distributed computer system linked through a network. The inventory server 251 controls the search through the product database 271 and service catalogue 272 using the product items, services, activities, or events requested by the user as key terms that were entered into a query for the interactive mapping system. The yellow pages or listing server 252 interfaces with the business listings 273 so that items, services, activities, or events found by the inventory server 251 can be associated with particular businesses, shopping malls, sports centers, etc., and their respective locations. A reviews and coupons database 274 can provide additional information on all the business places for products, services, activities, and events. The database update module 270 is used to update the product database 271, the service categories 272, the business listings 273, and the reviews and coupons database 274. For example, availability of products of a shop can be updated on a continuous basis. Also, information on the mere existence or relocation of a shop or a service location is maintained for the interactive mapping system.

The e-commerce server 258 provides access to companies who aggregate and share their data on a request-by-request basis. For example, the e-commerce server can directly access the stock or price databases of individual companies, so as to provide updated information to the user of the interactive mapping system. If a product that is queried by the user is not available in a particular shop, or is for example out of the price range specified by the user when querying the interactive mapping system, the e-commerce server allows the interactive mapping system to access the relevant data of the individual shops. Thus, it is possible to remove certain shops from consideration based on a determination that they cannot provide the product, service, activity, or event as desired by the user at the time the user intends to make his trip. In another example, a fitness center, movie theater, opera, reservation system, and update on available seats or available fitness machines can be accessed, and thus a trip to a full fitness center, movie theater, or opera can be avoided if places are not available. If places or seats are available for the fitness center, theater, or opera, the seats could then be reserved or purchased.

The route management server 257 generates the individual route points and also, if applicable, a stop-point based on the results of the inventory server 251 and yellow pages or listing server 252. Further, the route management server 257 takes into account other information that was input to the interactive mapping system by the user, such as time limitations to the entire trip or to the individual route points, start time of the trip, maximum prices for products, services, activities, or events, quality or user review ratings required by the user for the individual product, service, activity, or event, availability of the products, services, activities, or events, or any other trip criteria the user would like to take into account.

The mapping server 256 gets the resulting stop-points from the route management server 257 and creates the route map that is displayed for the user via a graphical user interface. The mapping server can for example access a generic mapping program like MS Streets and Trips or access Internet-based mapping services, such as mapquest or others. If the trip or itinerary proposed by the mapping server 256 does not fulfill the global trip criteria set by the user, for example, the itinerary exceeds the maximum expected length of the trip, duration of the trip, too high gas costs, number of stops at traffic lights, or too high a traffic density on the roads, the mapping server 256 or the ShopSpot server 255 can inform the user by showing this information, or by listing alternative routes for comparison. It is also possible for the user to modify his criteria and subsequently request a new trip from the mapping server 256. Data entered by the user to query the ShopSpot server 255 can be stored within the session data of the web browser that can be identified optionally with a cookie that contains the unique session identification. Several such sessions can be tracked to analyze user intent and interests, allowing for more intuitive selection of services, vendors, and products to the user, so as to create an user profile. Additionally, the user can create a personal account on ShopSpot that allows for user data to be built into a user profile.

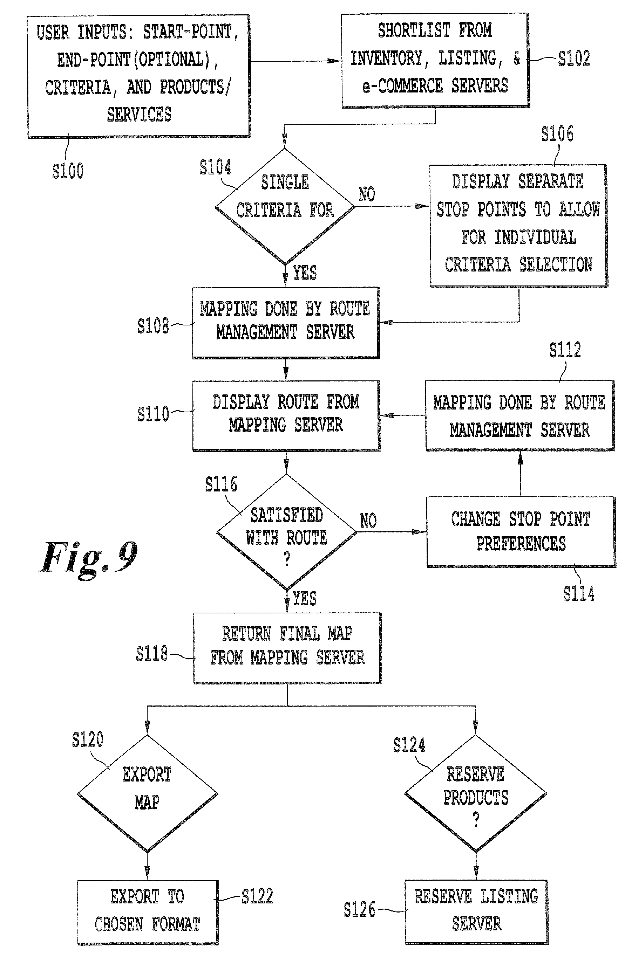

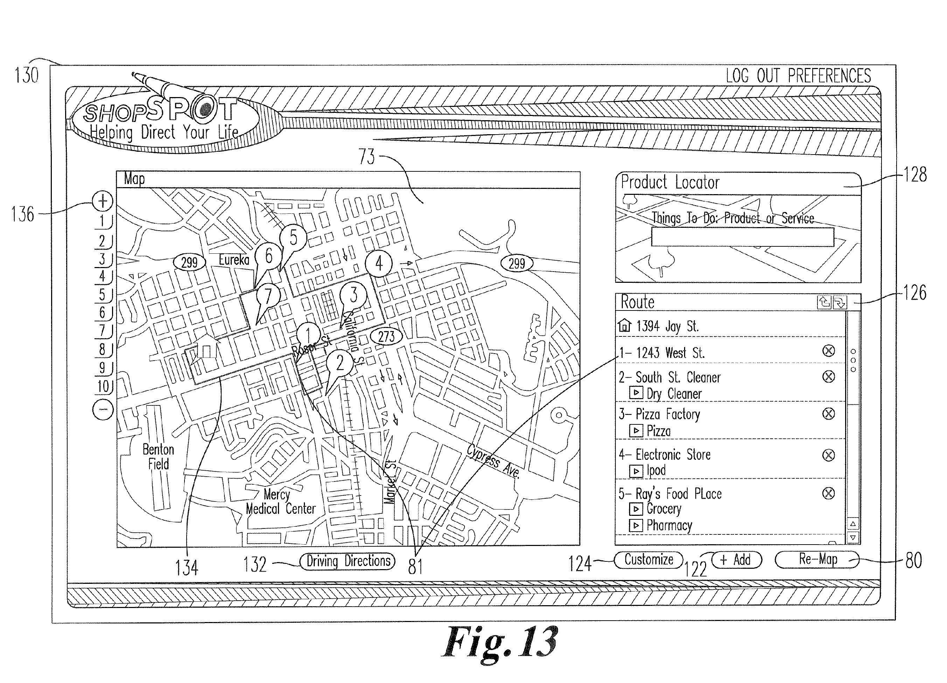

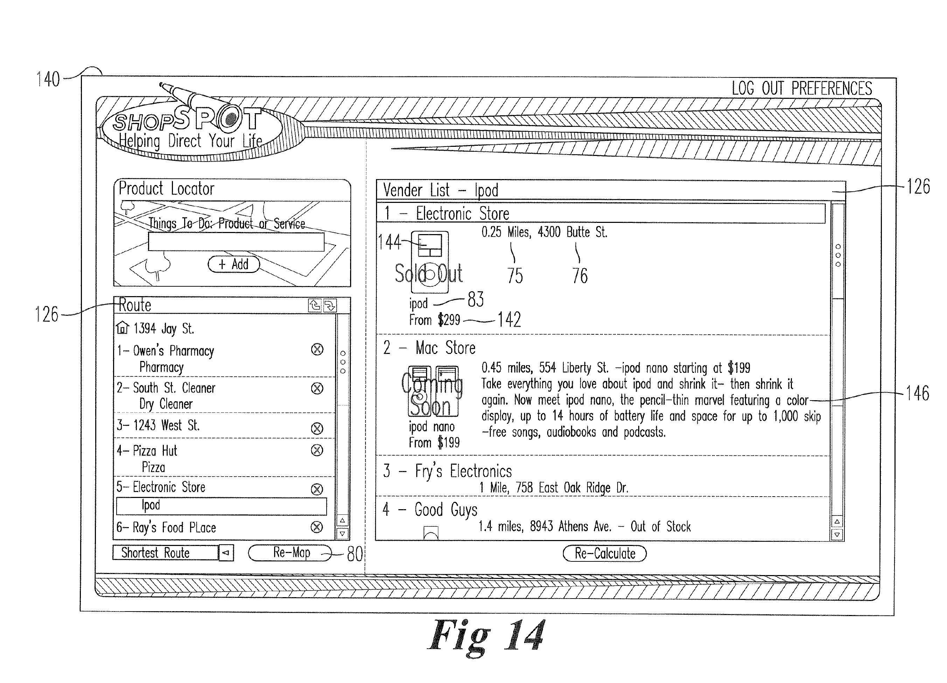

FIG. 9 illustrates a flow chart of an exemplary procedure performed by the interactive mapping system in interaction with a user. In step S100, the user first inputs into the system his start point, end point, products, services, activity, or event requests together with other limitations or requirements for these route points, and further inputs other global criteria for the entire itinerary. This information may be provided by the user, for example, through an interface such as the example of FIG. 2. The process then proceeds to step S102, where the ShopSpot middleware 50 combines the services from the inventory server 51, yellow pages or listing server 52, and e-commerce servers 58 to provide a list of pre-qualifying route points for the itinerary or trip. The process then proceeds to step S104, where the user can further specify or modify the trip, based on the users own knowledge but also on data now available after step S102. These criteria can further specify or define the trip as a whole or the individual route points. An example of this is the list 54 shown in FIG. 5. If the user does not want to set any global trip criteria or limitation parameters, the user has to option to have the individual route points further specified or limited, by going to step S106. The process then proceeds to step S108, where after setting global or individual route point criteria, the route is then optimized and mapped. An example of an optimized and routed map can be seen in FIG. 4 or in FIG. 13. The process then proceeds to step S116, where the user can either go to the next step to have the map viewed, printed or exported, or can make additional changes. The process then proceeds to step S114, where, if the user was not satisfied with the itinerary or the chosen route points, can go back to step S112. Step S112 performs the same task or process as step S108 to change individual route point criteria or parameters, or can also enter global itinerary limitations to the mapping criteria as a whole. A possible implementation of such a step is shown in FIG. 5 or FIG. 14. The step S116 can be repeated as many times as desired by the user, until the user is satisfied with the itinerary and the chosen route points. The process then proceeds to step S118, where the driving directions and all the other required data related to the proposed itinerary and the route points can be calculated and prepared for printing, exporting or viewing. The process then proceeds to step S120, where the user exports the map by printing, sending to a PDA, sending to a GPS system, etc. The process then proceeds to step S124, where the user is asked if he wants to reserve any products, services, activities or events. If the user desires a reservation, the process proceeds to step S126, where the interactive mapping system can contact different e-commerce servers, electronic reservations systems, or reserve listing servers to reserve the items they are going to buy, reserve the activities they want to attend or perform, or reserve a time of service such as car oil change, hair dressers, etc. For example, an electronic reservations system of the movie theater, fitness center, golf course, driving or shooting range, etc., can be contacted and a time as well as the required resources can be reserved.

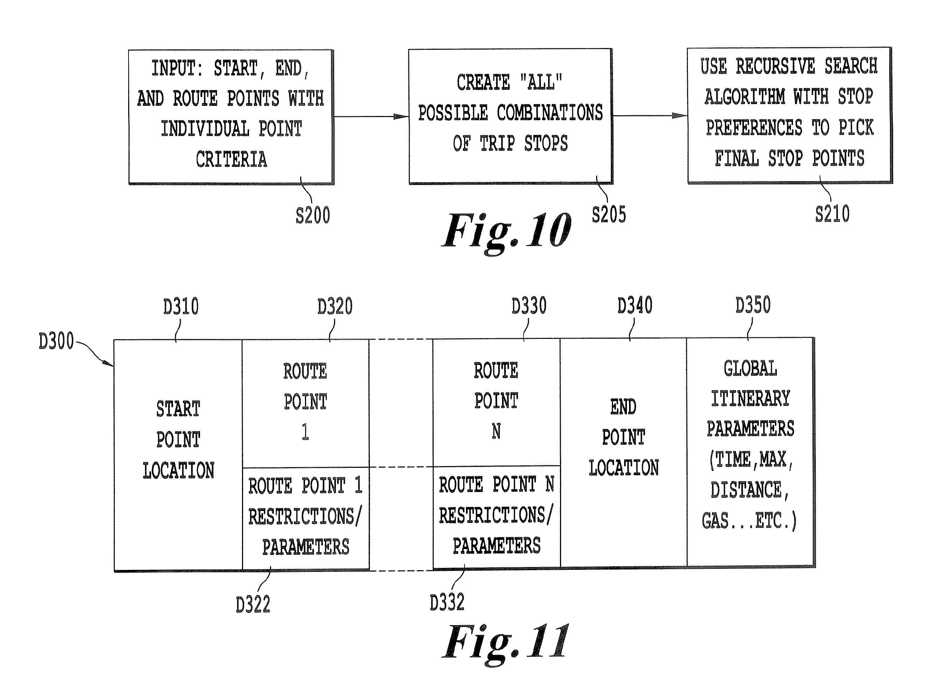

FIG. 10 is an exemplary representation of a flow-chart of the algorithm performed by the interactive mapping system 2 to create the itinerary for the buying, participating or performing the products, services, activities, or events. The route management server optimizes the trip route as a function of an entire set of data inputted by the user. In a first step S200 data is entered by the user so as to provide the base information for the itinerary. The user enters start point, end point, and a series of route points (products, services or activity locations or names), and their individual criteria to create possible combinations of trip stops. The process then proceeds to step S205, where the possible route points are created, based on the available data from the user and all the other available resources. Some basic assumptions, global criteria limiting or further defining the trip, are made, such as cost per mile of travel, distance willing to travel, etc. Some people might want to travel an extra 100 miles to save $1, therefore the trip can be optimized to achieve the lowest overall cost of the products, services, activities or events, by not taking into account the gas and maintenance costs of driving the vehicle throughout the itinerary. The process then proceeds to step S210, where a recursive, tree, or other appropriate search algorithm is used, such as the algorithm described at (http://en.wikipedia.org/wiki/Recursive_algorithm), to pick the optimum number of stops and their locations, while taking into account user preferences.

One possible embodiment of the implementation of the search algorithm is done by optimizing a function based upon all possible trip constraints (e.g., total time, total cost, length of trip, etc.). The function can be set up to only optimize upon constraints found pertinent by the user or the program. The optimized function then returns the proposed trip itinerary.

FIG. 11 illustrates a data structure of one example of data used for a shopping trip query. The data structure D300 shown in FIG. 11 illustrates information that will be used to query the interactive mapping system, and the information of the data structure D300 is entered by the user according to the present invention. The data structure D300 is created as a result of the search query that can be entered via the user interface, and will subsequently be processed by the interactive mapping system. The information used in the query includes start point location D300, end point location D330, a first route point D310, a last route point D320, and global itinerary parameters D340. The data structure can be defined such that multiple route points can be entered by the user to the interactive mapping system. Each route point D310, D320 may include additional parameters or information further defining the route point. It is also within the scope of the invention that the data field D330 remains empty, if the start and end point of the itinerary are the same.

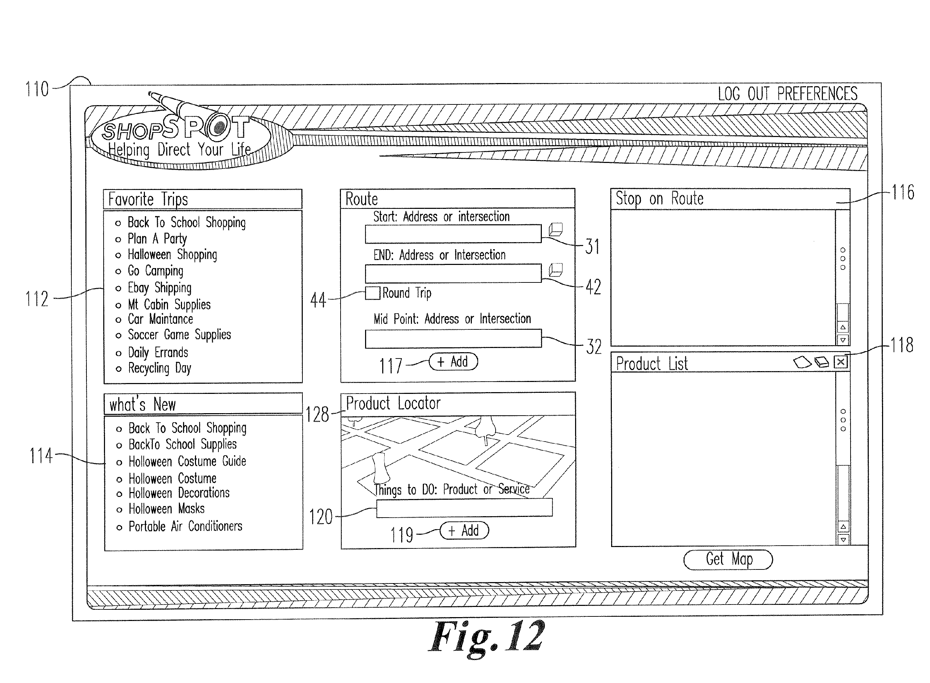

FIG. 12 illustrates a screen shot of another exemplary embodiment of a start screen or a query page 110 used as a graphical user interface for the interactive shopping system. In this embodiment of the query page 110, a query field 120 to enter data to locate a product is added. The user can specify what he wants to do, such as buying products, buying services, perform activities, etc. These items can be entered in the product locator. With the button 119, more products, services, activities or events can be added to the product locator list. After querying, the interactive mapping system combines products together that can be bought in a single store, shopping mall, etc. to find a smaller number of route points than products, services, activities or events entered. The query page 110 also allows entry of the start point with the field 31 and the end point with the field 42. If the check box 44 is selected by the user, the start point and the end point are the same, signifying that the itinerary is a round trip. Route points can be added in the field 32, by specifying additional locations. In this embodiment, the route points are not products, services, activities, or events, but geographical locations or addresses, where the itinerary passes by. For example, the user may want to drive from work to home and back to work again, while buying, performing or accomplishing different services, products, activities, or events. In this example, the home address would be a route point, and his work address would be both the start point and the end point. With the product locator query 120, the user can add the different products, services, and activities he wants to have bought or performed while following the itinerary. The button 117 allows adding additional route points, if more than one is desired. With the product locator query 120, it is possible to enter a list of different products, services, activities, or events and the products will be listed on the query page 110 in the product list 118. In response to the query of the product locator, the interactive mapping system classifies the products into different categories, and creates a list of possible route points, which may be stores, shopping malls, sports centers, etc. Thus, the interactive mapping system combines different products into one category and associates the category to one route point. For example, apples, oranges, and tomatoes may be classified into a category "food" and the category food may be associated to a food shop such as a SAFEWAY, HARRIS TEETER, GIANT, etc. The food shop then becomes a potential route point of the itinerary. The stops on the route, either the route points where the user will buy or perform products, services, activities, or events, or where the user will stop at a chosen geographical location or address (such as his home address or a friend's address in the middle of the itinerary), can be shown on the query page 110 in the list 116.

If the user of the interactive mapping system has consumer habits that are regularly repeated or if the user wants to memorize a certain itinerary, the user can save an itinerary calculated by the interactive mapping system. For example, every Friday the user may want to go to the dry cleaners, to the car wash, and to the video store to rent a couple of DVD's for the weekend. This itinerary can be saved, for example under the name "weekend starter trip" and can be recalled every Friday afternoon, before performing the trip. The query page 110 shows on the left side of the screen a list of favorite trips 112 that were saved by the user, or were proposed by the interactive mapping system and their commercial partners, such as companies who pay the interactive mapping system provider to have their shopping trips listed for different types of users. Such trips can be dedicated to a theme, such as Christmas shopping, Halloween experience, city afternoon workout, etc. In the example given in FIG. 12, these trips are shown in the list 114 "What's New." The user has the ability to use the same data from the itinerary and driving directions of the last trip, but can also recalculate the trip by querying the interactive mapping system. The interactive mapping system can thereby take temporary variable parameters into account, by routing the same query entry data for a different time and date, creating a new itinerary by taking variables such as holiday week-end traffic, availability of products and services, construction work along the roads usually used to follow the itinerary, into account. The itinerary can be saved either locally on his PC, terminal, PDA or cell phone, but can also be saved on a server, for example if the user is registered to the interactive mapping system service.

FIG. 13 illustrates the results of the itinerary after querying the interactive mapping system, in the form of another embodiment of a user interface 130. The interface shows a map 73 with a first proposal of an itinerary 134. The itinerary's start point is symbolized with a house on the map, and the map shows 7 route points. The route points are listed in a scrollable window 126. The route point number 5 is the location "Ray's Food Place," which has the products grocery and pharmacy associated with it. With the product locator 128, additional products, services, activities or events can be added. In this embodiment, the map 73 presented by the interactive mapping system is equipped with interactive viewing tools, for example the zoom and pan function 136. The button "Driving Directions" 132 allows the calculation of the driving directions of the proposed itinerary. The list of proposed route points can be further limited, changed or customized by the button 124. Once the list has been further customized, new products were located and added to the list 126, it is possible to remap the route by pushing or clicking the "Re-Map" button 80.

FIG. 14 illustrates a graphical user interface 140 showing a more detailed view of the list of route points calculated by the interactive mapping system or assembled by the user. A product 83, in this example an APPLE IPOD that the user wants to purchase is shown as an icon 114 on the list. The store associated to the product is shown, as well as the address of the store 76 and the distance 75 from the closest route point or the start or end point. Further information related to the product can be displayed, for example the price 142 of the product at that particular shop, or technical or commercial description 146, as well as customer reviews of the product. Such detailed information shown on the list 126 gives to the user the possibility to further customize, change or expand the list, since all the necessary information to make a decision to buy the product can be listed.

Obviously, numerous modifications and variations of the present invention are possible in light of the above teachings. It is therefore to be understood that, within the scope of the appended claims, the invention can be practiced otherwise than as specifically described herein.

## Claims

1. A method of generating a travel itinerary, comprising the steps of:
- specifying a criterion for a query (S100), the criteria including :
at least one of a start point (D310) and an end point (D340) of the travel itinerary, the start point and the end point being a geographic location, and
at least one route point (D320), the route point being at least one of a service, a product, a place, an activity, and an event ;
- querying (S108) an interactive mapping system (2,256) with criterion to obtain information defining the travel itinerary, said information including :
- mapping information including geographic information related to the at least one of the start point and the end point and the at least one route point, and
- route point descriptive information including consumer information related to the at least one route point; and
- displaying the travel itinerary as at least one of a map, driving instructions, and the consumer information (S110).

2. The method of claim 1, wherein :
the criteria further includes a characteristic of the travel itinerary, the characteristic being at least one of a total distance of the travel itinerary, a gas cost to traverse the travel itinerary, a gas consumption value to follow the travel itinerary, an estimated time to traverse the travel itinerary, a number of traffic lights, and a traffic density quantification.

3. The method of claim 2, wherein:
the querying step further comprises calculating the travel itinerary based on at least one of minimizing and maximizing at least one characteristic of the travel itinerary.

4. The method of the claims 1 to 3, wherein:
the information corresponding to the at least one route point includes information corresponding to at least one of a consumer review, a company name, an address, a distance from the at least one route point to the start point or the end point, a distance from the at least one route point to another route point, an availability of parking, hours of operation, an availability of a product, and an availability of a service.

5. The method of one of the claims 1 to 4, further comprising the steps of:
specifying a revised criteria (S114) including information corresponding to the at least one route point after the displaying step; and querying the interactive mapping (S112) system with the revised criteria to obtain a revised travel itinerary.

6. The method of the previous claim, further comprising the step of:
exporting at least one of the map, driving instructions, and the consumer information to a device (S120).

7. The method of one of the claims 1 to 6, wherein:
the querying step further comprises combining at least two route points into a common route point based on information related to the at least two route points.

8. The method of claim 7, wherein:
the common route point is at least one of a shopping mall and a store, and a service provider.

9. The method of one of the claims 1 to 8, wherein:
the route point descriptive information comprises at least one of a geographic location and an address included in the travel itinerary.

10. A system for mapping a travel itinerary, comprising:
- means (6,1110, 111, 1112) for specifying a criterion for a query, the criterion including :
at least one of a start point and an end point of the travel itinerary, the start point and the end point being a geographic location, and
at least one route point, the route point being at least one of a service, a product, a place, an activity, and an event ;
- means (1101) for querying an interactive mapping system (2) with the criterion to obtain information defining the travel itinerary, the information including :
mapping information including geographic information related to the at least one of the start point and the end point and the at least one route point, and
route point descriptive information including consumer information related to the at least one route point; and
- means (1115, 1116, 1117) for displaying the travel itinerary as at least one of a map, driving instructions, and the consumer information.

11. The system of claim 10, further comprising :
- means for specifying a revised criterion including information corresponding to the at least one route point; and
- means for querying the interactive mapping system with the revised criteria to obtain a revised travel itinerary.

12. A computer implemented system for generating a travel itinerary, comprising:
- a mapping database populated with entries including geographic information related to at least one of a start point, an end point, and a route point of the travel itinerary ;
- a route point database populated with entries including information related to at least one of a service, a product, a place, an activity, or an event;
- a processor; and
- a computer readable medium encoded with processor readable instructions that when executed by the processor implement the method according to one of the claims 1 to 10.

13. A computer program product to be stored in a system for generating a travel itinerary, said computer program product comprising instructions to implement the method according to one of the claims 1 to 10, when executed by a processor of said system.
